(19) **Europäisches Patentamt / European Patent Office / Office européen des brevets**

(11) **EP 1 947 655 B1**

(12) **EUROPEAN PATENT SPECIFICATION**

(45) Date of publication and mention of the grant of the patent:
**29.06.2011 Bulletin 2011/26**

(21) Application number: **06810669.9**

(22) Date of filing: **27.09.2006**

(51) Int Cl.:
*H01B 5/14* (2006.01)  *H01B 13/00* (2006.01)
*G06F 3/041* (2006.01)  *G06F 3/045* (2006.01)
*C08J 7/04* (2006.01)  *H01B 1/12* (2006.01)

(86) International application number:
**PCT/JP2006/319211**

(87) International publication number:
**WO 2007/037292 (05.04.2007 Gazette 2007/14)**

(54) **TRANSPARENT CONDUCTIVE SHEET FOR TOUCH PANEL, METHOD FOR MANUFACTURING SAME AND TOUCH PANEL**

TRANSPARENTES LEITFÄHIGES BLATT FÜR EINE BERÜHRUNGSTAFEL, VERFAHREN ZU SEINER HERSTELLUNG UND BERÜHRUNGSTAFEL

FEUILLE CONDUCTRICE TRANSPARENTE POUR ÉCRAN TACTILE, SON PROCÉDÉ DE FABRICATION ET ÉCRAN TACTILE

(84) Designated Contracting States:
**BE DE FI GB**

(30) Priority: **29.09.2005 JP 2005283862**
**04.11.2005 JP 2005320540**

(43) Date of publication of application:
**23.07.2008 Bulletin 2008/30**

(60) Divisional application:
**09009910.2 / 2 109 117**

(73) Proprietor: **SHIN-ETSU POLYMER CO., LTD.**
**Tokyo 103-0023 (JP)**

(72) Inventors:
• **YOSHIDA, Kazuyoshi**
**Tokyo 1030023 (JP)**

• **NING, Tailu**
c/o Shin-Etsu Polymer Co. LTD.

**Tokyo 1030023 (JP)**
• **ABE, Rika**
c/o Shin-Etsu Polymer Co. Ltd.
**Tokyo 1030023 (JP)**
• **MATSUBAYASHI, Sou**
**Tokyo 1030023 (JP)**

(74) Representative: **Berkenbrink, Kai-Oliver et al**
**Patentanwälte Becker & Müller**
**Turmstrasse 22**
**40878 Ratingen (DE)**

(56) References cited:
EP-A- 1 384 739   JP-A- 07 330 901
JP-A- 08 120 167   JP-A- 2003 251 733
JP-A- 2005 146 259   JP-A- 2005 146 259
US-A1- 2003 170 456   US-A1- 2003 170 492

**Description**

TECHNICAL FIELD

The present invention relates to a transparent conductive sheet for use in a touch panel, and a method for manufacturing the same. Furthermore, the present invention also relates to a touch panel that functions as a data input device.
Priority is claimed on Japanese Patent Application No. 2005-283862, filed September 29, 2005, and Japanese Patent Application No. 2005-320540, filed November 4,2005.

BACKGROUND ART

In recent years, touch panels that enable information to be input by simply touching a portion of the screen have become widely used in bank ATMs (automated teller machines), OA equipment monitors, and search terminals for all manner of information.
A touch panel contains a pair of transparent conductive sheets each containing a transparent conductive layer formed on a transparent substrate, and an insulating spacer provided within a portion of the space between the pair of touch panel transparent conductive sheets, wherein the transparent conductive layers of the transparent conductive sheets are positioned facing each other. In this type of touch panel, when a finger or touch pen or the like is touched against the transparent conductive sheet provided at the surface, the transparent conductive layers of the transparent conductive sheets make contact, causing conduction. By utilizing this conduction, the touch panel is able to function as a data input device.
Conventionally, sheets in which a conductive layer formed from ITO (hereafter referred to as an ITO conductive layer) is formed on a PET film have been used as the transparent conductive sheets for touch panels. However, because ITO conductive layers have a large refractive index and generate considerable surface reflection of light, the light transmittance decreases, and because the layers tend to be tinged yellow, the color tone of the image also changes. Furthermore, ITO conductive layers may also undergo degeneration and blackening as a result of electrochemical reactions. For these reasons, the visibility of the image deteriorates, and moreover, because the flexibility of the ITO conductive layers is poor, the ITO conductive layers are prone to cracking when bent, causing an increase in the electrical resistance. In addition, formation of the ITO conductive layer on a PET film is not an easy task.
As a result, patent reference 1 proposes the use of a layer formed by application of a solution containing a polythiophene derivative, a water-soluble organic compound, a dopant and a water-soluble epoxy monomer as the transparent conductive layer instead of an ITO conductive layer.

[Patent Reference 1]

Japanese Unexamined Patent Application, First Publication No. 2005-146259

EP 1 384 739 A1 discloses a transparent electrical conductive film used for transparent conductive material used for manufacturing input device such as touch panel-type input device; the conductive film is formed by application of a solution containing a polythiophene derivative, a water-soluble organic compound, a dopant and a water-soluble epoxy monomer. JP 08120167 A discloses a composition, suitable for forming an electrically conductive coating film layer, comprising (A) a polyaniline and/or its derivative, (B) a protonic acid dopant, (C) a copolymerized polyester and (D) water; this composition is obtained by dissolving or dispersing components (A) and (B) in water and/or a solvent soluble in water and dissolving or dispersing component (C) in water and/or a solvent soluble in water, then mixing these solutions or dispersions.

JP 2003256141 A and US 2003/0170456 A1 both disclose a transparent multilayer comprising a first conductive layer containing an intrinsically conductive polymer, a film forming binder, and spacer elements embedded in and projected from the surface of the first conductive layer, and a second conductive layer separated from the first conductive layer by the spacer element; the multilayer is useful as a component in a touch screen display.

JP 2003308736 A and US 2003/0170492 A1 both disclose a transparent multilayer comprising a first conductive layer comprising a first conductive layer containing an intrinsically conductive polymer and a film forming binder, a second conductive layer, and spacer elements separating the first and second conductive layers, the first conductive layer further comprising an actinic radiation absorbing compound; the film is useful as a component in a touch screen display.

## DISCLOSURE OF THE INVENTION

### PROBLEMS TO BE SOLVED BY THE INVENTION

Touch panels require high levels of conductivity, transparency, water resistance, adhesion between the transparent substrate and the transparent conductive layer, and durability. In particular, the conductivity should be such that the surface resistivity is not more than 1,000 $\Omega$, the transparency should be such that the total light transmittance is not less than 80% and the haze is not more than 5%, and the durability should be such that the surface resistivity can be maintained under conditions of high temperature and high humidity.

However, with the transparent conductive sheet disclosed in the patent reference 1, the surface resistivity is high, meaning the required properties listed above cannot be completely satisfied. As a result, in the case of a touch panel that uses the transparent conductive sheets disclosed in the patent reference 1, ensuring a high degree of operational reliability while maintaining favorable durability has proven difficult.

The present invention has an object of providing a transparent conductive sheet for a touch panel that has a surface resistivity of not more than 1,000 $\Omega$, a total light transmittance of not less than 80%, and a haze of not more than 5%, and exhibits excellent levels of water resistance, adhesion between the transparent substrate and the transparent conductive layer, and retention of the surface resistivity under conditions of high temperature and high humidity, as well as a method for manufacturing such a transparent conductive sheet. Furthermore, the present invention also has an object of providing a touch panel with excellent operational reliability and superior durability.

### MEANS FOR SOLVING THE PROBLEMS

A first aspect of the transparent conductive sheet for a touch panel according to the present invention is a transparent conductive sheet for a touch panel that includes a transparent substrate and a transparent conductive layer formed on top of the transparent substrate, wherein
the transparent conductive layer contains a $\pi$-conjugated conductive polymer, a polyanion and an ester compound, and the ester compound is obtained by a dehydration reaction between a carboxylic acid compound containing two or more carboxyl groups and a polyhydric alcohol compound containing two or more hydroxyl groups, and said transparent conductive layer further comprising the features according to claim 1.

In the transparent conductive sheet for a touch panel according to the present invention, the transparent conductive layer preferably also includes a conductivity improver that includes a hydroxyl group-containing aromatic compound containing two or more hydroxyl groups, a nitrogen-containing aromatic heterocyclic compound, a compound containing an amide group, or a compound containing an imide group.

(b): a compound containing a hydroxyl group, and one group selected from the group consisting of an allyl group, vinyl ether group, methacryl group, acryl group, methacrylamide group and acrylamide group.

A first aspect of the method for manufacturing a transparent conductive sheet for a touch panel according to the present invention is a method for manufacturing a transparent conductive sheet for a touch panel by applying a conductive polymer coating material to a transparent substrate, wherein
the $\pi$-conjugated conductive polymer coating material contains a $\pi$-conjugated conductive polymer, a polyanion and an ester compound, and the ester compound is obtained by a dehydration reaction between a carboxylic acid compound containing two or more carboxyl groups and a polyhydric alcohol compound containing two or more hydroxyl groups, and said method further comprising the features according to claim 3.

In the method for manufacturing a transparent conductive sheet for a touch panel according to the present invention, the conductive polymer coating material preferably also includes a conductivity improver that includes a hydroxyl group-containing aromatic compound containing two or more hydroxyl groups, a nitrogen-containing aromatic heterocyclic compound, a compound containing an amide group, or a compound containing an imide group.

A touch panel of the present invention includes a pair of transparent conductive sheets for a touch panel, and an insulating spacer provided within a portion of the space between the pair of transparent conductive sheets for a touch panel, with the transparent conductive layers of the transparent conductive sheets for a touch panel positioned facing each other, wherein
at least one of the pair of transparent conductive sheets for a touch panel is the transparent conductive sheet for a touch panel described above.

EFFECTS OF THE INVENTION

The transparent conductive sheet for a touch panel according to the present invention has a surface resistivity of not more than 1,000 Ω, a total light transmittance of not less than 80%, and a haze of not more than 5%, and also exhibits excellent levels of water resistance, adhesion between the transparent substrate and the transparent conductive layer, and retention of the surface resistivity under conditions of high temperature and high humidity.

The method for manufacturing a transparent conductive sheet for a touch panel according to the present invention enables a transparent conductive sheet for a touch panel that has a surface resistivity of not more than 1,000 Ω, a total light transmittance of not less than 80%, and a haze of not more than 5%, and exhibits excellent levels of water resistance, adhesion between the transparent substrate and the transparent conductive layer, and retention of the surface resistivity under conditions of high temperature and high humidity to be manufactured with relative ease.

The touch panel of the present invention exhibits excellent operational reliability and superior durability.

BRIEF DESCRIPTION OF THE DRAWINGS

FIG. 1 is a cross-sectional view showing an embodiment of a transparent conductive sheet for a touch panel according to the present invention.

FIG. 2 is a cross-sectional view showing an embodiment of a touch panel according to the present invention.

DESCRIPTION OF THE REFERENCE SYMBOLS

1      Touch panel
10     Transparent conductive sheet (transparent conductive sheet for a touch panel)
11     Transparent substrate
12     Transparent conductive layer
20     Insulating spacer

BEST MODE FOR CARRYING OUT THE INVENTION

<Transparent Conductive Sheet for Touch Panel>

As follows is a description of one embodiment of the transparent conductive sheet for a touch panel (hereafter abbreviated as "the transparent conductive sheet") according to the present invention.

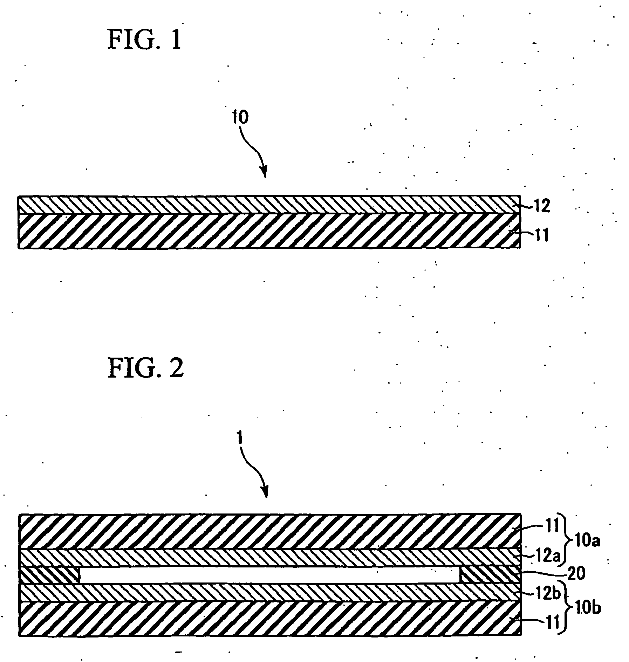

FIG. 1 shows a transparent conductive sheet 10 according to this embodiment. This transparent conductive sheet 10 includes a transparent substrate 11 and a transparent conductive layer 12.

(Transparent Substrate)

Although there are no particular restrictions on the transparent substrate 11, a resin film is preferred in terms of flexibility, and a transparent resin film is particularly preferred. Examples of the resin used in forming the (transparent) resin film include polyethylene terephthalate, polybutylene terephthalate, polyethylene naphthalate, polystyrene, polyvinyl chloride, polycarbonate and polyvinylidene fluoride, and although the resin may be selected in accordance with the intended purpose, in terms of achieving superior levels of heat resistance, dimensional stability and transparency, polyethylene terephthalate is particularly preferred.

(Transparent Conductive Layer)

The transparent conductive layer 12 is a layer that contains a π-conjugated conductive polymer, a polyanion, and an ester compound or specific polymerizable compound. Furthermore, if required, the transparent conductive layer 12 may also include a conductivity improver, a dopant, another resin component, or an additive, and from the viewpoint of achieving greater conductivity, preferably includes a conductivity improver.

A description of each of the compositional elements of the transparent conductive layer 12 is presented below.

[π-Conjugated Conductive Polymer]

There are no particular restrictions on the π-conjugated conductive polymer, provided it is an organic polymer in which the principal chain is formed from a π-conjugated system, and examples include polypyrroles, polythiophenes, polyacetylenes, polyphenylenes, polyphenylenevinylenes, polyanilines, polyacenes, polythiophenevinylenes, and copolymers thereof. In terms of achieving superior stability in air, polypyrroles, polythiophenes, and polyanilines are preferred.

The π-conjugated conductive polymer exhibits satisfactory conductivity and satisfactory compatibility with binder resins even without substitution, but in order to further enhance the conductivity and the dispersibility or solubility within the binder resin, functional groups such as alkyl groups, carboxyl groups, sulfo groups, alkoxyl groups or hydroxyl groups are preferably introduced into the π-conjugated conductive polymer.

Specific examples of the π-conjugated conductive polymer include polypyrrole, poly(N-methylpyrrole), poly(3-methylpyrrole), poly(3-ethylpyrrole), poly(3-n-propylpyrrole), poly(3-butylpyrrole), poly(3-octylpyrrole), poly(3-decylpyrrole), poly(3-dodecylpyrrole), poly(3,4-dimethylpyrrole), poly(3,4-dibutylpyrrole), poly(3-carboxypyrrole), poly(3-methyl-4-carboxypyrrole), poly(3-methyl-4-carboxyethylpyrrole), poly(3-methyl-4-carboxybutylpyrrole), poly(3-hydroxypyrrole), poly(3-methoxypyrrole), poly(3-ethoxypyrrole), poly(3-butoxypyrrole), poly(3-methyl-4-hexyloxypyrrole), poly(thiophene), poly(3-methylthiophene), poly(3-ethylthiophene), poly(3-propylthiophene), poly(3-butylthiophene), poly(3-hexylthiophene), poly(3-heptylthiophene), poly(3-octylthiophene), poly(3-decylthiophene), poly(3-dodecylthiophene), poly(3-octadecylthiophene), poly(3-bromothiophene), poly(3-chlorothiophene), poly(3-iodothiophene), poly(3-cyanothiophene), poly(3-phenylthiophene), poly(3,4-dimethylthiophene), poly(3,4-dibutylthiophene), poly(3-hydroxythiophene), poly(3-methoxythiophene), poly(3-ethoxythiophene), poly(3-butoxythiophene), poly(3-hexyloxythiophene), poly(3-heptyloxythiophene), poly(3-octyloxythiophene), poly(3-decyloxythiophene), poly(3-dodecyloxythiophene), poly(3-octadecyloxythiophene), poly(3-methyl-4-methoxythiophene), poly(3,4-ethylenedioxythiophene), poly(3-methyl-4-ethoxythiophene), poly(3-carboxythiophene), poly(3-methyl-4-carboxythiophene), poly(3-methyl-4-carboxyethylthiophene), poly(3-methyl-4-carboxybutylthiophene), polyaniline, poly(2-methylaniline), poly(3-isobutylaniline), poly(2-anilinesulfonic acid), and poly(3-anilinesulfonic acid).

[Polyanion]

Examples of the polyanion include a substituted or unsubstituted polyalkylene, substituted or unsubstituted polyalkenylene, substituted or unsubstituted polyimide, substituted or unsubstituted polyamide, or substituted or unsubstituted polyester, wherein the polymer may be composed solely of structural units that contain an anion group, or may be composed of structural units that contain an anion group and structural units that do not contain an anion group.

A polyalkylene is a polymer in which the principal chain is composed of repeating methylene units.

A polyalkenylene is a polymer in which the principal chain is formed from a structural unit that contains one unsaturated double bond (a vinyl group).

Examples of the polyimide include polyimides formed from an acid anhydride such as pyromellitic dianhydride, biphenyltetracarboxylic dianhydride, benzophenonetetracarboxylic dianhydride or 2,2'-[4,4'-di(dicarboxyphenyloxy)phenyl]propane dianhydride, and a diamine such as oxydiamine, paraphenylenediamine, metaphenylenediamine or benzophenonediamine.

Examples of the polyamide include polyamide 6, polyamide 6,6 and polyamide 6,10.

Examples of the polyester include polyethylene terephthalate and polybutylene terephthalate.

In those cases where the polyanion contains a substituent group, examples of the substituent group include an alkyl group, hydroxyl group, amino group, carboxyl group, cyano group, phenyl group, phenol group, ester group, or alkoxyl group. Considering factors such as the solubility in organic solvents, the heat resistance, and the compatibility with resins, an alkyl group, hydroxy group, phenol group or ester group is preferred.

Examples of the alkyl group include alkyl groups such as a methyl, ethyl, propyl, butyl, isobutyl, t-butyl, pentyl, hexyl, octyl, decyl or dodecyl group, and cycloalkyl groups such as a cyclopropyl, cyclopentyl or cyclohexyl group.

Examples of the hydroxyl group include hydroxyl groups bonded to the principal chain of the polyanion either directly or via another functional group, and examples of this other functional group include an alkyl group of 1 to 7 carbon atoms, alkenyl group of 2 to 7 carbon atoms, amide group, or imide group. The hydroxyl group is substituted either at the terminal of the functional group, or at a non-terminal position within the functional group.

Examples of the amino group include amino groups bonded to the principal chain of the polyanion either directly or via another functional group, and examples of this other functional group include an alkyl group of 1 to 7 carbon atoms, alkenyl group of 2 to 7 carbon atoms, amide group, and imide group. The amino group is substituted either at the terminal of the functional group, or at a non-terminal position within the functional group.

Examples of the phenol group include phenol groups bonded to the principal chain of the polyanion either directly or via another functional group, and examples of this other functional group include an alkyl group of 1 to 7 carbon atoms, alkenyl group of 2 to 7 carbon atoms, amide group, and imide group. The phenol group is substituted either at the terminal of the functional group, or at a non-terminal position within the functional group.

Examples of polyalkylenes containing substituent groups include polyethylene, polypropylene, polybutene, polypentene, polyhexene, polyvinyl alcohol, polyvinylphenol, poly(3,3,3-tritluoropropylene), polyacrylonitrile, polyacrylate, and polystyrene.

Specific examples of the polyalkenylene include polymers containing at least one structural unit selected from amongst propenylene, 1-methylpropenylene, 1-butylpropenylene, 1-decylpropenylene. 1-cyanopmpenylene, 1-phenylpropenylene, 1-hydroxypropenylene, 1-butenylene, 1-methyl-1-butenylene, 1-ethyl-1-butenylene, 1-octyl-1-butenylene, 1-pentadecyl-1-butenylene, 2-methyl-1-butenylene, 2-ethyl-1-butenylene, 2-butyl-1-butenylene, 2-hexyl-1-butenylene, 2-octyl-1-butenylene, 2-decyl-1-butenylene, 2-dodecyl-1-butenylene, 2-phenyl-1-butenylene, 2-butenylene, 1-methyl-2-butenylene, 1-ethyl-2-butenylene, 1-octyl-2-butenylene, 1-pentadecyl-2-butenylene, 2-methyl-2-butenylene, 2-ethyl-2-butenylene, 2-butyl-2-butenylene, 2-hexyl-2-butenylene, 2-octyl-2-butenylene, 2-decyl-2-butenylene, 2-dodecyl-2-butenylene, 2-phenyl-2-butenylene, 2-propylenephenyl-2-butenylene, 3-methyl-2-butenylene, 3-ethyl-2-butenylene, 3-butyl-2-butenylene, 3-hexyl-2-butenylene, 3-octyl-2-butenylene, 3-decyl-2-butenylene, 3-dodecyl-2-butenylene, 3-phenyl-2-butenylene, 3-prooylenephenyl-2-butenylene, 2-pentenylene, 4-propyl-2-pentenylene, 4-butyl-2-pentenylene, 4-hexyl-2-pentenylene, 4-cyano-2-pentenylene, 3-methyl-2-pentenylene, 4-ethyl-2-pentenylene, 3-phenyl-2-pentenylene, 4-hydroxy-2-pentenylene, and hexenylene.

Examples of the anion group of the polyanion include $-O-SO_3^-X^+$, $-SO_3^-X^+$, and $- COO^-X^+$ (wherein, $X^+$ in each of the formulas represents a hydrogen ion or an alkali metal ion). In other words, the polyanion is a polymer acid containing sulfo groups and/or carboxyl groups. Of the above anion groups, from the viewpoint of achieving favorable doping of the π-conjugated conductive polymer, $-SO_3^-X^+$ and $-COO^-X^+$ groups are preferred.

Furthermore, these anion groups may be positioned on adjacent units within the principal chain of the polyanion, or with a predetermined spacing therebetween.

Of the above polyanions, in terms of solvent solubility and conductivity, polyisoprenesulfonic acid, copolymers that include polyisoprenesulfonic acid, polysulfoethyl methacrylate, copolymers that include polysulfoethyl methacrylate, poly(4-sulfobutyl methacrylate), copolymers that include poly(4-sulfobutyl methacrylate), polymethacryloxybenzenesulfonic acid, copolymers that include polymethacryloxybenzenesulfonic acid, polystyrenesulfonic acid, and copolymers that include polystyrenesulfonic acid are preferred.

The polymerization degree of the polyanion is preferably within a range from 10 to 100,000 monomer units, and from the viewpoints of solvent solubility and conductivity is even more preferably within a range from 50 to 10,000 monomer units.

The blend quantity of the polyanion is preferably within a range from 0.1 to 10 mols, and even more preferably from 1 to 7 mols, per 1 mol of the π-conjugated conductive polymer. If the quantity of the polyanion is less than 0.1 mols, then the doping effect on the π-conjugated conductive polymer tends to weaken, and the conductivity may be unsatisfactory. Moreover, the dispersibility or solubility within solvents also deteriorates, making obtaining a uniform dispersion difficult. Furthermore, if the quantity of the polyanion exceeds 10 mols, then the quantity of the π-conjugated conductive polymer diminishes, making it difficult to achieve satisfactory conductivity.

[Ester Compound]

The ester compound in the present invention is obtained by a dehydration reaction between a carboxylic acid compound containing two or more carboxyl groups and a polyhydric alcohol compound containing two or more hydroxyl groups.

Examples of the carboxylic acid compound include aliphatic, aromatic, and cyclic aliphatic compounds containing two or more carboxyl groups. Specific examples include aliphatic carboxylic acid compounds such as maleic acid, fumaric acid, itaconic acid, citraconic acid, malonic acid, 1,4-butanedicarboxylic acid, succinic acid, tartaric acid, adipic acid, D-glucaric acid, glutaconic acid and citric acid, and aromatic carboxylic acid compounds with at least one carboxyl group bonded to an aromatic ring, such as phthalic acid, terephthalic acid, isophthalic acid, tetrahydrophthalic anhydride, 5-sulfoisophthalic acid, 5-hydroxyisophthalic acid, methyltetrahydrophthalic anhydride, 4,4'-oxydiphthalic acid, biphenyltetracarboxylic dianhydride, benzophenonetetracarboxylic dianhydride, naphthalenedicarboxylic acid, trimellitic acid and pyromellitic acid.

Of these carboxylic acids, aromatic carboxylic acid compounds are preferred in terms of heat resistance and solvent resistance.

Examples of the polyhydric alcohol compound include aliphatic, aromatic, and cyclic aliphatic compounds containing two or more hydroxyl groups. Specific examples include polyhydric aliphatic alcohols such as ethylene glycol, diethylene glycol, triethylene glycol, propylene glycol, dipropylene glycol, 1,3-butylene glycol, 1,4-butylene glycol, glycerol, diglycerol, D-glucose, D-glucitol, isoprene glycol, dimethylolpropionic acid, butanediol, 1,5-pentanediol,1,6-hexanediol, 1,9-nonanediol, neopentyl glycol, trimethylolethane, trimethylolpropane, pentaerythritol, dipentaerythritol, glucose, tartaric acid, D-glucaric acid and glutaconic acid,

polymer alcohols such as polyethylene glycol, polytetramethylene glycol, polypropylene glycol, polyglycerol, polyvinyl alcohol, cellulose, polysaccharides and sugar alcohols, as well as

1,4-dihydroxybenzene, 1,3-dihydroxybenzene, 2,3-dihydroxy-1-pentadecylbenzene, 2,4-dihydroxyacetophenone, 2,5-dihydroxyacetophenone, 2,4-dihydroxybenzophenone, 2,6-dihydroxybenzophenone, 3,4-dihydroxybenzophenone, 3,5-dihydroxybenzophenone, 2,4'-dihydroxydiphenylsulfone, 2,2',5,5'-tetrahydroxydiphenylsulfone, 3,3',5,5'-tetramethyl-4,4'-dihydroxydiphenylsulfone, 2,3-dihydroxybenzoic acid, 2,4-dihydroxybenzoic acid, 2,5-dihydroxybenzoic acid, 2,6-dihydroxybenzoic acid, 3,5-dihydroxybenzoic acid, 1,4-hydroquinonesulfonic acid, 4,5-hydroxybenzene-1,3-disulfonic acid, 1,5-dihydroxynaphthalene, 1,6-dihydroxynaphthalene, 2,6-dihydroxynaphthalene, 2,7-dihydroxynaphthalene, 2,3-dihydroxynaphthalene, 1,5-dihydroxynaphthalene-2,6-dicarboxylic acid, 1,6-dihydroxynaphthalene-2,5-dicarboxylic acid, 1,5-dihydroxynaphthoic acid, 1,4-dihydroxy-2-naphthoic acid phenyl ester, 4,5-dihydroxynaphthalene-2,7-disulfonic acid, 1,8-dihydroxy-3,6-naphthalenedisulfonic acid, 6,7-dihydroxy-2-naphthalenesulfonic acid, 1,2,3-trihydroxybenzene (pyrogallol), 1,2,4-trihydroxybenzene, 5-methyl-1,2,3-trihydroxybenzene, 5-ethyl-1,2,3-trihydroxybenzene, 5-propyl-1,2,3-trihydroxybenzene, 2,4,6-trihydroxybenzene, trihydroxybenzoic acid, methyl trihydroxybenzoate, ethyl trihydroxybenzoate, propyl trihydroxybenzoate, isobutyl trihydroxybenzoate, trihydroxyacetophenone, trihydroxybenzophenone, trihydroxybenzaldehyde, trihydroxyanthraquinone, tetiahydroxy-p-benzoquinone, and tetrahydroxyanthraquinone.

The molecular weight of the ester compound is not more than 10,000, and even more preferably 5,000 or less. Provided the molecular weight is small, the ester compound is able to readily enter the gaps between the π-conjugated conductive polymer and the polyanion, meaning a homogenous cross-linked product can be obtained with relative ease. If the molecular weight is too large, then the effect described above does not manifest satisfactorily, which tends to invite deterioration in the conductivity.

[Conductivity Improver]

Examples of the conductivity improver include hydroxyl group-containing aromatic compounds containing two or more hydroxyl groups, nitrogen-containing aromatic heterocyclic compounds, compounds containing an amide group, and compounds containing an imide group. These conductivity improvers may be used either alone or in combination.

There are no particular restrictions on the hydroxyl group-containing aromatic compound, provided the compound contains two or more hydroxyl groups bonded to the aromatic ring that forms the molecule, and specific examples include 1,4-dihydroxybenzene, 1,3-dihydroxybenzene, 2,3-dihydroxy-1-pentadecylbenzene, 2,4-dihydroxyacetophenone, 2,5-dihydroxyacetophenone, 2,4-dihydroxybenzophenone, 2,6-dihydroxybenzophenone, 3,4-dihydroxybenzophenone, 3,5-dihydroxybenzophenone, 2,4'-dihydroxydiphenylsulfoae, 2,2',5,5'-tetrahydroxydiphenylsulfone, 3,3',5,5'-tetramethyl-4,4'-dihydroxydiphenylsulfone, hydroxyquinonecarboxylic acid and salts thereof, 2,3-dihydroxybenzoic acid, 2,4-dihydroxybenzoic acid, 2,5-dihydroxybenzoic acid, 2,6-dihydroxybenzoic acid, 3,5-dihydroxybenzoic acid, 1,4-hydroquinonesulfonic acid and salts thereof, 4,5-hydroxybenzene-1,3-disulfonic acid and salts thereof, 1,5-dihydroxynaphthalene, 1,6-dihydroxynaphthalene, 2,6-dihydroxynaphthalene, 2,7-dihydroxynaphthalene, 2,3-dihydroxynaphthalene, 1,5-dihydroxynaphthalene-2,6-dicarboxylic acid, 1,6-dihydroxynaphthalene-2,5-dicarboxylic acid, 1-,5-dihydroxynaphthoic acid, 1,4-dihydroxy-2-naphthoic acid phenyl ester, 4,5-dihydroxynaphthalene-2,7-disulfonic acid and salts thereof, 1,8-dihydmxy-3,6-naphthalenedisulfonic acid and salts thereof, 6,7-dihydroxy-2-naphthalenesulfonic acid and salts thereof, 1,2,3-trihydroxybenzene (pyrogallol),1,2,4-trihydroxybenzene, 5-methyl-1,2,3-trihydroxybenzene, 5-ethyl-1,2,3-trihydroxybenzene, 5-propyl-1,2,3-trihydroxybenzene, 2,4,6-trihydroxybenzene, trihydroxybenzoic acid, methyl trihydroxybenzoate, ethyl trihydroxybenzoate, propyl trihydroxybenzoate, isobutyl trihydroxybenzoate, trihydroxyacetophenone, tnhydroxybenzophenone, trihydroxybenzaldehyde, trihydroxyanthraquinone, tetrahydroxy-p-benzoquinone, and tetrahydroxyanthraquinone.

Of these hydroxyl group-containing aromatic compounds, from the viewpoints of conductivity and the crosslinking effect, compounds containing an anion group having a doping effect on the π-conjugated conductive polymer, and compounds containing an ester group are preferred.

Examples of the nitrogen-containing aromatic heterocyclic compound include pyridine compounds or derivatives thereof containing a single nitrogen atom imidazoles or derivatives thereof, pyrimidines or derivatives thereof, and pyrazines or derivatives thereof containing two nitrogen atoms, and triazines or derivatives thereof containing three nitrogen atoms. In terms of factors such as solvent solubility, pyridine compounds or derivatives thereof, imidazoles or derivatives thereof, and pyrimidines or derivatives thereof are preferred.

Specific examples of pyridine compounds or derivatives thereof include pyridine, 2-methylpyridine, 3-methylpyridine, 4-methylpyridine, 4-ethylpyridine, 2,4-dimethylpyridine, 2-vinylpyridine, 4-vinylpyridine, 2-methyl-6-vinylpyridine, 5-methyl-2-vinylpyridine, 4-butenylpyridine, 4-pentenylpyridine, 2,4,6-trimethylpyridine, 3-cyano-5-methylpyridine, 2-pyridinecarboxylic acid, 6-methyl-2-pyridinecarboxyHc acid, 2,6-pyridinedicarboxylic acid, 4-pyridinecarboxaldehyde, 4-aminopyridine, 2,3-diaminopyridine, 2,6-diaminopyridine, 2,6-diamino-4-methylpyridine, 4-hydroxypyridine, 2,6-dihydroxypyridine, methyl 6-hydroxynicotinate, 2-hydroxy-5-pyridinemethanol, ethyl 6-hydroxynicotinate, 4-pyridinemethanol, 4-pyridineethanol, 2-phenylpyridine, 3-methylquinoline, 3-ethylquinoline, quinolinol, 2,3-cyclopentenopyridine, 2,3-cyclohexanopyridine, 1,2-di(4-pyridyl)ethane, 1,2-di(4-pyridyl)propane, 2-pyridinecarboxyaldehyde, 2-pyridinecarboxylic acid; 2-pyridinecarbonitrile, 2,3-pyridinedicarboxylic acid, 2,4-pyridinedicarboxylic acid, 2,5-pyridinedicarboxylic acid, and 3-pyridinesulfonic acid.

Specific examples of imidazoles or derivatives thereof include imidazole, 2-methylimidazole, 2-propylimidazole, 2-undecylimidazole, 2-phenylimidazole, N-methylimidazole, N-vinylimidazole, N-allylimidazole, 2-methyl-4-vinylimidazole, 2-methyl-1-vinylimidazole, 1-(2-hydroxyethyl)imidazole, 2-ethyl-4-methylimidazole, 1,2-dimethylimidazole, 1-benzyl-2-methylixnidazole, 1-benzyl-2-phenylimidazole, 1-cyanoethyl-2-methylimidazole, 1-cyanoethyl-2-ethyl-4-methylimidazole, 2-phenyl-4,5-dihydroxymethylimidazole, 1-acetylimidazole, 4,5-imidazoledicarboxylic acid, dimethyl 4,5-imidazoledicarboxylate, benzimidazole, 2-aminobenzimidazole, 2-aminobenzimidazole-2-sulfonic acid, 2-amino-1-methylbenzimidazole, 2-hydroxybenzimidazole, and 2-(2-pyridyl)benzimidazole.

Specific examples of pyrimidines or derivatives thereof include 2-amino-4-chloro-6-methylpyrimidine, 2-amino-6-chloro-4-methoxypyrimidine, 2-amino-4,6-dichloropyrimidine, 2-amino-4,6-dihydroxypyrimidine, 2-amino-4,6-dimethylpyrimidine, 2-amino-4,6-dimethoxypyrimidine, 2-aminopyrimidine, 2-amino-4-methylpyrimidine, 4,6-dihydroxypyrimidine, 2,4-dihydroxypyrimidine-5-carboxylic acid, 2,4,6-triaminopyrimidine, 2,4-dimethoxypyrimidine, 2,4,5-trihydroxypyrimidine, and 2,4-pyrimidinediol.

Specific examples of pyrazines or derivatives thereof include pyrazine, 2-methylpyrazine, 2,5-dimethylpyrazine, pyrazinecarboxylic acid, 2,3-pyrazinedicarboxylic acid, 5-methylpyrazinecarboxylic acid, pyrazinamide, 5-methylpyrazinamide, 2-cyanopyrazine, aminopyrazine, 3-aminopyrazine-2-carboxylic acid, 2-ethyl-3-methylpyrazine, 2-ethyl-3-methylpyrazine, 2,3-dimethylpyrazine, and 2,3-diethylpyrazine.

Specific examples of triazines or derivatives thereof include 1,3,5-triazine, 2-amino-1,3,5-triazine, 3-amino-1,2,4-triazine, 2,4-diamino-6-phenyl-1,3,5-triazine, 2,4,6-triamino-1,3,5-triazine, 2,4,6-tris(trifluoromethyl)-1,3,5-triazine, 2,4,6-tri-2-pyridine-1,3,5-triazine, disodium 3-(2-pyridine)-5,6-bis(4-phenylsulofnic acid)-1,2,4-triazine, 3-(2-pyridine)-5,6-diphenyl-1,2,4-triazine, and 2-hydroxy-4,6-dichloro-1,3,5-triazine.

Examples of compounds containing an amide group include acrylamide-based resins and polyamides. An acrylamide-based resin is a (co)polymer that contains an amide group-containing monomer as a structural unit. Examples of these amide group-containing monomers include acrylamide, methacrylamide, N-methylmethacrylamide, N-methylacrylamide, N-methylolacrylamide, N-methylolmethacrylamide, N,N-dimethylolacrylamide, N-methoxymethylacrylamide, N-methoxymethylmethacrylamide, N-phenylacrylamide, N-(2-hydmxyethyl)acrylamide, and N-methyl(2-hydroxyethyl)acrylamide.

The acrylamide-based resin may also include, as other structural units, copolymer components such as acrylate esters (examples of the alcohol residue include a methyl group, ethyl group, n-propyl group, isopropyl group, n-butyl group, isobutyl group, t-butyl group, 2-ethylhexyl group, cyclohexyl group, phenyl group, benzyl group, or phenylethyl group); methacrylate esters (in which the alcohol residue, is as defined above); hydroxyl group-containing monomers such as 2-hydroxyethyl acrylate, 2-hydroxyethyl methacrylate, 2-hydroxypropyl acrylate, and 2-hydroxypropyl methacrylate,; amino group-containing monomers such as N,N-diethylaminoethyl acrylate and N,N-diethylaminoethyl methacrylate; and glycidyl group-containing monomers such as glycidyl acrylate, glycidyl methacrylate and allyl glycidyl ether.

Examples of methods of introducing an unsaturated double bond into an acrylamide-based resin include a method involving an addition reaction between an active hydrogen formed from a hydroxyl group-containing monomer, amino group-containing monomer or glycidyl group-containing monomer, and an isocyanate group-containing unsaturated monomer such as vinyl isocyanate, allyl isocyanate, 2-methacryloyloxyethyl isocyanate or 2-acryloyloxyethyl isocyanate, and a method involving a condensation reaction between a carboxyl group-containing monomer and a glycidyl group-containing monomer.

A polyamide is a polymer obtained by a condensation reaction between a dicarboxylic acid and a diamine. Examples of the dicarboxylic acid include succinic acid, adipic acid, sebacic acid, azelaic acid, terephthalic acid, isophthalic acid, orthophthalic acid, hexahydroterephthalic acid, hexahydroisophthalic acid, hexahydroorthophthalic acid, and naphthalenedicarboxylic acid.

Examples of the diamine include oxydiamine, paraphenylenediamine, metaphenylenediamine, and benzophenonediamine.

In order to introduce an unsaturated double bond into the polyamide, a terminal acid anhydride unit and an isocyanate group-containing unsaturated monomer may be subjected to a condensation reaction. Examples of the isocyanate group-containing unsaturated monomer include vinyl isocyanate, allyl isocyanate, 2-methacryloyloxyethyl isocyanate, and 2-acryloyloxyethyl isocyanate.

Compounds containing an imide group (hereafter referred to as imide compounds) are single molecule compounds that contain a linkage structure represented by the formula -CO-NH-CO- (where the CO portions contain double bonds) within the molecular structure.

Imide compounds may also be classified as aliphatic imides or aromatic imides or the like depending on the nature of the functional groups at both terminals, but examples of imide compounds differentiated in terms of their skeletons include phthalimide or phthalimide derivatives, succinimide or succinimide derivatives, benzimide or benzimide derivatives, maleimide or maleimide derivatives, and naphthalimide or naphthalimide derivatives. From the viewpoint of solubility, an aliphatic imide is preferred.

Specific examples of imide compounds include 1,8-naphthalimide, phthalimide, 3-nitrophthalimide, 4-nitrophthalimide, 3-aminophthalimide, 4-aminophthalimide, cyclohexane-1,2-dicarboxyimide, allantoin, hydantoin, barbituric acid, alloxane, glutarimide, succinimide, 5-butylhydantoic acid, 5,5-dimethylhydantoin, 1-methylhydantoin, 1,5,5-trimethylhydantoin, 5-hydantoinacetic acid, N-hydroxy-5-norbornene-2,3-dicarboxyimide, semicarbazide, $\alpha,\alpha$-dimethyl-6-methylsuccinimide, bis[2-(succinimidooxycarbonyloxy)ethyl]sulfone, $\alpha$-methyl-$\alpha$-propylsuccinimide, cyclohexylimide, 1,3-dipropyleneurea, maleimide, N-methylmaleimide, N-ethylmaleimide, N-hydroxymaleimide, 1,4-bismaleimidobutane, 1,6-bismaleimidohexane, 1,8-bismaleimidooctane, and N-carboxyheptylmaleirnide.

The molecular weight of the imide compound is preferably within a range from 60 to 5,000, even more preferably from 70 to 1,000, and is most preferably from 80 to 500.

The blend quantity of the conductivity improver is preferably within a range from 0.1 to 100 mols, even more preferably from 0.5 to 50 mols, and most preferably from 1.0 to 20 mols, relative to the anion groups of the polyanion do not contribute to doping of the $\pi$-conjugated conductive polymer. If the quantity of the conductivity improver is less than the lower limit of the above range, then the effect of the conductivity improver weakens, and the conductivity tends to decrease, whereas if the quantity exceeds the upper limit, the conductivity tends to decrease due to a reduction in the concentration of the $\pi$-conjugated conductive polymer.

[Dopant]

The aforementioned polyanion functions as a dopant for the $\pi$-conjugated conductive polymer, but another dopant besides the polyanion may also be included. This other dopant may be either a donor or acceptor dopant, provided it alters the redox potential of the conjugated electrons within the $\pi$-conjugated conductive polymer upon doping or undoping of the $\pi$-conjugated conductive polymer.

Examples of donor dopants include alkali metals such as sodium and potassium, alkaline earth metals such as calcium and magnesium, and quaternary amine compounds such as tetramethylammonium, tetraethylammonium, tetrapropylammonium, tetrabutylammonium, methyltriethylammonium, and dimethyldiethylammonium.

Examples of compounds that can be used as acceptor dopants include halogen compounds, Lewis acids, protic acids, organic cyano compounds, and organometallic compounds.

Moreover, examples of halogen compounds include chlorine ($Cl_2$), bromine ($Br_2$), iodine ($I_2$), iodine chloride (ICl), iodine bromide (IBr), and iodine fluoride (IF).

Examples of Lewis acids include $PF_3$, $AsF_5$, $SbF_5$, $BF_5$, $BCl_5$, $BBr_5$, and $SO_3$.

As the organic cyano compound, compounds having two or more cyano groups within a conjugated bond can be used. Examples include tetracyanoethylene, tetracyanoethylene oxide, tetracyanobenzene, tetracyanoquinodimethane, and tetracyanoazanaphthalene.

Examples of protic acids include inorganic acids and organic acids. Specific examples of inorganic acids include hydrochloric acid, sulfuric acid, nitric acid, phosphoric acid, fluoroboric acid, hydrofluoric acid, and perchloric acid. Examples of organic acids include organic carboxylic acids and organic sulfonic acids.

As the organic carboxylic acid, compounds having one or more carboxyl groups within an aliphatic, aromatic or cyclic aliphatic structure can be used. Specific examples include formic acid, acetic acid, oxalic acid, benzoic acid, phthalic acid, maleic acid, fumaric acid, malonic acid, tartaric acid, citric acid, lactic acid, succinic acid, monochloroacetic acid, dichloroacetic acid, trichloroacetic acid, trifluoroacetic acid, nitroacetic acid, and triphenylacetic acid.

As the organic sulfonic acid, compounds having either one, or two or more sulfo groups within an aliphatic, aromatic or cyclic aliphatic structure can be used. Examples of compounds containing one sulfo group include sulfonic acid compounds such as methanesulfonic acid, ethanesulfonic acid, 1-propanesulfonic acid, 1-butanesulfonic acid, 1-hexanesulfonic acid, 1-heptanesulfonic acid, 1-octanesulfonic acid, 1-nonanesulfonic acid, 1-decanesulfonic acid, 1-dodecanesulfonic acid, 1-tetradecanesulfonic acid, 1-pentadecanesulfonic acid, 2-bromoethanesulfonic acid, 3-chloro-2-hydroxypropanesulfonic acid, trifluoromethanesulfonic acid, colistinmethanesulfonic acid, 2-acrylamido-2-methylpropanesulfonic acid, aminomethanesulfonic acid, 1-amino-2-naphthol-4-sulfonic acid, 2-amino-5-naphthol-7-sulfonic acid, 3-aminopropanesulfonic acid, N-cyclohexyl-3-aminopropanesulfonic acid, benzenesulfonic acid, p-toluenesulfonic acid, xylenesulfonic acid, ethylbenzenesulfonic acid, propylbenzenesulfonic acid, butylbenzenesulfonic acid, pentylbenzenesulfonic acid, hexylbenzenesulfonic acid, heptylbenzenesulfonic acid, octylbenzenesulfonic acid, nonylbenzenesulfonic acid, decylbenzenesulfonic acid, undecylbenzenesulfonic acid, dodecylbenzenesulfonic acid, pentadecylbenzenesulfonic acid, hexadecylbenzenesulfonic acid, 2,4-dimethylbenzenesulfonic acid, dipropylbenzenesulfonic acid, 4-aminobenzenesulfonic acid, o-aminobenzenesulfonic acid, m-aminobenzenesulfonic acid, 4-amino-2-chlorotoluene-5-sulfonic acid, 4-amino-3-methylbenzene-1-sulfonic acid, 4-amino-S-methoxy-2-methylbenzenesulfonic acid, 2-amino-5-methylbenzene-1-sulfonic acid, 4-amino-2-methylbenzene-l-sulfonic acid, 5-amino-2-methylbenzene-1-sulfonic acid, 4-amino-3-methylbenzene-1-sulfonic acid, 4-acetamido-3-chlorobenzenesulfonic acid, 4-chloro-3-nitrobenzenesulfonic acid, p-chlorobenzenesulfonic acid, naphthalenesulfonic acid, methylnaphthalenesulfonic acid, propylnaphthalenesulfonic acid, butylnaphthalenesulfonic acid, pcntylnaphthalenesulfonic acid, dimethylnaphthalenesulfonic acid, 4-amino-1-naphthalenesulfonic acid, 8-chloronaphthalene-1-sulfonic acid, naphthalenesulfonic acid-formalin polycondensate, and melaminesulfonic acid-formalin polycondensate.

Examples of compounds containing two or more sulfo groups include ethanedisulfonic acid, butanedisulfonic acid, pentanedisulfonic acid, decanedisulfonic acid, m-benzenedisulfonic acid, o-benzenedisulfonic acid, p-benzenedisulfonic acid, toluenedisulfonic acid, xylenedisulfonic acid, chlorobenzenedisulfonic acid, fluorobenzenedisulfonic acid, aniline-2,4-disulfonic acid, aniline-2,5-disulfonic acid, dimethylbenzenedisulfonic acid, diethylbenzenedisulfonic acid, dibutylbenzenesulfonic acid, naphthalenedisulfonic acid, methylnaphthalenedisulfonic acid, ethylnaphthalenedisulfonic acid, dodecylnaphthalenedisulfonic acid, pentadecylnaphthalenedisulfonic acid, butylnaphthalenedisulfonic acid, 2-amino-1,4-benzenedisulfonic acid, 1-amino-3,8-naphthalenedisulfonic acid, 3-amino-1,5-naphthalenedisulfonic acid, 8-amino-1-naphthol-3,6-disulfonic acid, 4-amino-5-naphthol-2,7-disulfonic acid, anthracenedisulfonic acid, butylanthracenedisulfonic acid, 4-acetamido-4'-isothio-cyanatostilbene-2,2'-disulfonic acid, 4-acetamido-4'-isothiocyanatostilbene-2,2'-disulfonic acid, 4-acetamido-4'-maleimidylstilbene-2,2'-disulfonic acid, 1-acetoxypyrene-3,6,8-trisulfonic acid, 7-amino-1,3,6-naphthalenetrisulfonic acid, 8-aminonaphthalene-1,3,6-trisulfomc acid, and 3-amino-1,5,7-naphthalenetrisulfonic acid.

[Other Resin Components]

Other resin components may be added to ensure superior film-forming properties and film strength for the transparent conductive layer 12.

There are no particular restrictions on these other resin components, provided they are either compatible with, or dispersible by mixing with, the π-conjugated conductive polymer and the polyanion, and both thermosetting resins and thermoplastic resins may be used. Examples include polyester-based resins such as polyethylene terephthalate, polybutylene terephthalate and polyethylene naphthalate, polyimide-based resins such as polyimide and polyamideimide, polyamide-based resins such as polyamide 6, polyamide 6,6, polyamide 12 and polyamide 11, fluororesins such as polyvinylidene fluoride, polyvinyl fluoride, polytetrafluoroethylene, ethylene-tetrafluoroethylene copolymers and polychlorotrifluoroethylene, vinyl resins such as polyvinyl alcohol, polyvinyl ether, polyvinyl butyral, polyvinyl acetate and polyvinyl chloride, as well as epoxy resins, xylene resins, aramid resins, polyurethane-based resins, polyurea-based resins, melamine resins, phenolic resins, polyethers, acrylic resins, and copolymers thereof.

[Additives]

There are no particular restrictions on additives that may be used, provided they can be mixed with the π-conjugated conductive polymer and the polyanion, and examples include surfactants, antifoaming agents, coupling agents, neutralizing agents, and antioxidants.

Examples of surfactants include anionic surfactants such as carboxylates, sulfonates, sulfates, and phosphates; cationic surfactants such as amine salts and quaternary ammonium salts; amphoteric surfactants such as carboxybetaine, aminocarboxylates, and imidazoliumbetaine; and nonionic surfactants such as polyoxyethylene alkyl ethers, polyoxyethylene glycerol fatty acid esters, ethylene glycol fatty acid esters, and polyoxyethylene fatty acid amides.

Examples of antifoaming agents include silicone resins, and polydimethylsiloxane.

Examples of coupling agents include silane coupling agents containing vinyl groups, amino groups or epoxy groups or the like.

Examples of neutralizing agents include alkali compounds such as ammonia and sodium hydroxide, and nitrogen-containing compounds such as primary amines, secondary amines, and tertiary amines.

Examples of antioxidants include phenol-based antioxidants, amine-based antioxidants, phosphorus-based antioxidants, sulfur-based antioxidants, sugars, and vitamins.

In those cases where an ester compound is used, the transparent conductive sheet includes the π-conjugated conductive polymer, the polyanion, and the specific ester compound within the transparent conductive layer, and molecules of the ester compound either form ester linkages between residual carboxyl groups and residual hydroxyl groups within the ester compound, or form ether linkages between residual hydroxyl groups. Furthermore, the ester compound also forms ester linkages with residual polyanion groups within the polyanion. As a result, molecules of the polyanion become crosslinked, which is thought to bring molecules of the π-conjugated conductive polymer that have been doped with the polyanion closer together. Furthermore, hydroxyl groups within the ester compound interact readily with the anion groups of the polyanion, and it is thought that this interaction brings molecules of the polyanion closer together. As a result of these effects, the transparent conductive layer forms a dense structure, and exhibits excellent levels of water resistance, adhesion between the transparent substrate and the transparent conductive layer, and retention of the surface resistivity under conditions of high temperature and high humidity.

Furthermore, because molecules of the π-conjugated conductive polymer are drawn closer together, the hopping energy necessary for electrical conduction between molecules of the π-conjugated conductive polymer reduces, which improves the conductivity, and enables the surface resistivity to be reduced to no more than 1,000 Ω. Moreover, because the conductivity increases, the thickness of the transparent conductive layer can be reduced, which enables the transparency to be improved, and enables a total light transmittance of not less than 80% and a haze of not more than 5% to be achieved.

<Method for Manufacturing Transparent Conductive Sheet>

Next is a description of a method for manufacturing the conductive polymer coating material of the present invention.

In the method for manufacturing a transparent conductive sheet according to the present invention, in those cases where an ester compound is used, the ester compound is first synthesized in an ester compound synthesis step, by conducting a dehydration reaction between a carboxylic acid compound containing two or more carboxyl groups and a polyhydric alcohol compound containing two or more hydroxyl groups.

There are no particular restrictions on the method used for synthesizing the ester compound, and one possible method involves heating a mixture of the carboxylic acid compound and the polyhydric alcohol compound in the presence of a conventional acid or base catalyst, thereby causing a dehydration reaction. During this reaction, in order to ensure that at least one of the carboxyl groups and hydroxyl groups that function as crosslinking functional groups remain within the product, the quantity of the carboxyl groups within the carboxylic acid compound and the quantity of the hydroxyl groups within the polyhydric alcohol compound are preferably not equimolar. Specifically, the quantity of hydroxyl groups within the polyhydric alcohol compound is preferably within a range from 0.3 to 10 mols for each 1 mol of carboxyl groups within the carboxylic acid compound.

The synthesis conditions are also preferably set such that at least one of the carboxyl groups and hydroxyl groups remain within the product, and for example, the synthesis temperature is preferably within a range from 20 to 200°C. However, ether linkages also tend to be formed at high temperatures, and therefore the synthesis is preferably conducted at lower temperatures, specifically at a temperature within a range from 30 to 150°C.

Furthermore, the polyanion is synthesized in a polyanion synthesis step. Examples of methods of synthesizing the polyanion include methods of introducing anion groups directly into a polymer by treatment with an acid, sulfonation methods using a sulfonating agent, transfer methods, and methods involving production by polymerization of an anion group-containing polymerizable monomer. Of these, methods involving production by polymerization of an anion group-containing polymerizable monomer are preferred.

In a method of producing the polyanion by polymerization of an anion group-containing polymerizable monomer, the anion group-containing polymerizable monomer is subjected to chemical oxidative polymerization or radical polymerization in a solvent, in the presence of an oxidizing agent and/or a polymerization catalyst. If required, copolymerization may be conducted with a polymerizable monomer having no anion group.

Specifically, a predetermined quantity of the anion group-containing polymerizable monomer is dissolved in a solvent, the solution is held at a fixed temperature, and a solution prepared by previously dissolving an oxidizing agent and/or a polymerization catalyst in a solvent is then added to the solution and reacted to form the polyanion. In those cases where the resulting polyanion is an anionic acid salt, it is preferably converted into an anionic acid. Examples of conversion methods include exchange methods using an ion-exchange resin, dialysis methods and ultrafiltration methods. Of these, ultrafiltration methods are preferred in terms of ease of operation.

The anion group-containing polymerizable monomer is a monomer in which a portion of the structure has been substituted with one or more functional groups such as a monosubstituted sulfate ester group, carboxyl groups, or sulfo group, and examples include substituted or unsubstituted ethylenesulfonic acid compounds, substituted or unsubstituted styrenesulfonic acid compounds, substituted or unsubstituted acrylate sulfonic acid compounds, substituted or unsubstituted methacrylate sulfonic acid compounds, substituted or unsubstituted acrylamide sulfonic acid compounds, substituted or unsubstituted cyclovinylene sulfonic acid compounds, substituted or unsubstituted butadiene sulfonic acid compounds, and substituted or unsubstituted vinyl aromatic sulfonic acid compounds. Specific examples include vinylsulfonic acid and salts thereof, allylsulfonic acid and salts thereof, methallylsulfonic acid and salts thereof, styrenesulfonic acid, methallyloxybenzenesulfonic acid and salts thereof, allyloxybenzenesulfonic acid and salts thereof, α-methylstyrenesulfonic acid and salts thereof, acrylamido-t-butylsulfonic acid and salts thereof, 2-acrylamido-2-methylpropanesulfonic acid and salts thereof, cyclobutene-3-sulfonic acid and salts thereof, isoprenesulfonic acid and salts thereof, 1,3-butadiene-1-sulfonic acid and salts thereof, 1-methyl-1,3-butadiene-2-sulfonic acid and salts thereof, 1-methyl-1,3-butadiene-4-sulfonic acid and salts thereof, sulfoethyl acrylate ($CH_2CH$-COO-$(CH_2)_2$-$SO_3H$) and salts thereof, sulfopropyl acrylate ($CH_2CH$-COO-$(CH_2)_3$-$SO_3H$) and salts thereof, sulfo-t-butyl acrylate ($CH_2CH$-COO-$C(CH_3)_2CH_2SO_3H$) and salts thereof, sulfo-n-butyl acrylate ($CH_2CH$-COO-$(CH_2)_4$-$SO_3H$) and salts thereof, ethyl allylate sulfonic acid ($CH_2CHCH_2$-COO-$(CH_2)_2$-$SO_3H$) and salts thereof, t-butyl allylate sulfonic acid ($CH_2CHCH_2$-COO-$C(CH_3)_2CH_2$-$SO_3M$

and salts thereof, ethyl 4-pentenoate sulfonic acid $(CH_2CH(CH_2)_2\text{-}COO\text{-}(CH_2)_2\text{-}SO_3H)$ and salts thereof propyl 4-pentenoate sulfonic acid $(CH_2CH(CH_2)_2\text{-}COO\text{-}(CH_2)_3\text{-}SO_3H)$ and salts thereof, n-butyl 4-pentenoate sulfonic acid $(CH_2CH(CH_2)_2\text{-}COO\text{-}(CH_2)_4\text{-}SO_3H)$ and salts thereof, t-butyl 4-pentenoate sulfonic acid $(CH_2CH(CH_2)_2\text{-}COO\text{-}C(CH_3)_2CH_2\text{-}SO_3M$ and salts thereof, phenylene 4-pentenoate sulfonic acid $(CH_2CH(CH_2)_2\text{-}COO\text{-}C_6H_4\text{-}SO_3H)$ and salts thereof, naphthalene 4-pentenoate sulfonic acid $(CH_2CH(CH_2)_2\text{-}COO\text{-}C_{10}H_8\text{-}SO_3H)$ and salts thereof, sulfoethyl methacrylate $(CH_2C(CH_3)\text{-}COO\text{-}(CH_2)_2\text{-}SO_3H)$ and salts thereof, sulfopropyl methacrylate $(CH_2C(CH_3)\text{-}COO\text{-}(CH_2)_3\text{-}SO_3H)$ and salts thereof, sulfo-t-butyl methacrylate $(CH_2C(CH_3)\text{-}COO\text{-}C(CH_3)_2CH_2\text{-}SO_3H)$ and salts thereof, sulfo-n butyl methacrylate $(CH_2C(CH_3)\text{-}COO\text{-}(CH_2)_4\text{-}SO_3H)$ and salts thereof sulfophenylene methacrylate $(CH_2C(CH_3)\text{-}COO\text{-}C_6H_4\text{-}SO_3H)$ and salts thereof, and sulfonaphthalene methacrylate $(CH_2C(CH_3)\text{-}COO\text{-}C_{10}H_8\text{-}SO_3H)$ and salts thereof.

Examples of polymerizable monomers having no anion group include ethylene, propene, 1-butene, 2-butene, 1-pentene, 2-pentene, 1-hexene, 2-hexene, styrene, p-methylstyrene, p-ethylstyrene, p-butylstyrene, 2,4,6-trimethylstyrene, p-methoxystyrene, $\alpha$-methylstyrene, 2-vinylnaphthalene, 6-methyl-2-vinylnaphthalene, vinylpyridine, vinyl acetate, acrylaldehyde, acrylonitrile, N-vinyl-2-pyrrolidone, N-vinylacetamide, N-vinylformamide, N-vinylimidazole, acrylamide, N,N-dimethylacrylamide, acrylic acid, methyl acrylate, ethyl acrylate, propyl acrylate, n-butyl acrylate, isobutyl acrylate, t-butyl acrylate, isooctyl acrylate, isononylbutyl acrylate, lauryl acrylate, allyl acrylate, stearyl acrylate, isobornyl acrylate, cyclohexyl acrylate, benzyl acrylate, ethylcarbitol acrylate, phenoxyethyl acrylate, hydroxyethyl acrylate, methoxyethyl acrylate, ethoxyethyl acrylate, methoxybutyl acrylate, methacrylic acid, methyl methacrylate, ethyl methacrylate, n-butyl methacrylate, isobutyl methacrylate, t-butyl methacrylate, 2-ethylhexyl methacrylate, lauryl methacrylate, tridecyl methacrylate, stearyl methacrylate, cyclohexyl methacrylate, benzyl methacrylate, 2-hydroxyethyl methacrylate, 2-hydroxypropyl methacrylate, acryloylmorpholine, vinylamine, N,N-dimethylvinylamine, N,N-diethylvinylamine, N,N-dibutylvinylamine, N,N-di-t-butylvinylamine, N,N-diphenylvinylamine, N-vinylcarbazole, vinyl alcohol, vinyl chloride, vinyl fluoride, methyl vinyl ether, ethyl vinyl ether, cyclopropene, cyclobutene, cyclopentene, cyclohexene, cycloheptene, cyclooctene, 2-methylcyclohexene, vinylphenol, 1,3-butadiene,1-methyl-1,3-butadiene, 2-methyl-1,3-butadiene, 1,4-dimethyl-1,3-butadiene, 1,2-dimethyl-1,3-butadiene,1,3-dimethyl-1,3-butadiene,1-octyl-1,3-butadiene, 2-octyl-1,3-butadiene,1-phenyl-1,3-butadiene, 2-phenyl-1,3-butadiene, 1-bydroxy-1,3-butadiene, and 2-hydroxy-1,3-butadiene.

Examples of oxidizing agents and oxidation catalysts that may be used during the polymerization of the anion group-containing polymerizable monomer include peroxodisulfates such as ammonium peroxodisulfate (ammonium persulfate), sodium peroxodisulfate (sodium persulfate), and potassium peroxodisulfate (potassium persulfate), transition metal compounds such as ferric chloride, ferric sulfate, ferric nitrate and cupric chloride, metal halogen compounds such as boron trifluoride, metal oxides such as silver oxide and cesium oxide, peroxides such as hydrogen peroxide and ozone, organic peroxides such as benzoyl peroxide, and oxygen. The oxidizing agent or oxidation catalyst is preferably dissolved or dispersed within a predetermined quantity of a solvent so as to generate a specific concentration.

There are no particular restrictions on the solvent used during the polymerization, and any solvent that is capable of dissolving or dispersing the above monomer, and retaining the oxidative power of the oxidizing agent or oxidation catalyst can be used. Examples include polar solvents such as water, N-methyl-2-pyrrolidone, N,N-dimethylformamide, N,N-dimethylacetamide, dimethyl sulfoxide, hexamethylene phosphortriamide, acetonitrile and benzonitrile, phenols such as cresol, phenol and xylenol, alcohols such as methanol, ethanol, propanol and butanol, ketones such as acetone and methyl ethyl ketone, hydrocarbons such as hexane, benzene and toluene, carboxylic acids such as formic acid and acetic acid, carbonate compounds such as ethylene carbonate and propylene carbonate, ether compounds such as dioxane and diethyl ether, chain-like ethers such as ethylene glycol dialkyl ether, propylene glycol dialkyl ether, polyethylene glycol dialkyl ether and polypropylene glycol dialkyl ether, heterocyclic compounds such as 3-methyl-2-oxazolidinone, and nitrile compounds such as acetonitrile, glutarodinitrile, methoxyacetonitrile, propionitrile, and benzonitrile. These solvents may be used alone, as a mixture containing two or more of these solvents, or as a mixture with another organic solvent.

Next, in a conductive polymer formation step, a precursor monomer to the $\pi$-conjugated conductive polymer is subjected to chemical oxidative polymerization in the presence of the polyanion and an oxidizing agent or oxidative polymerization catalyst. Specifically, the polyanion solution is held at a constant temperature while the precursor monomer to the $\pi$-conjugated conductive polymer is added to the solution under constant stirring. A solution of the oxidizing agent and/or the oxidative polymerization catalyst is then added to the thus obtained mixed solution, and is dispersed uniformly and reacted, thus forming a $\pi$-conjugated conductive polymer.

Subsequently, a reaction terminator may be added to halt the polymerization reaction if required. Furthermore, steps for removing excess oxidizing agent and/or oxidative polymerization catalyst and reaction by-products, or for conducting ion exchange may be conducted following completion of the polymerization reaction.

Examples of the precursor monomer to the $\pi$-conjugated conductive polymer used in the conductive polymer formation step include pyrroles and derivatives thereof, thiophenes and derivatives thereof, and anilines and derivatives thereof.

Furthermore, the oxidizing agent and the solvent used during the chemical oxidative polymerization can use the same materials as those used during the polymerization of the anion group-containing polymerizable monomer.

During the above chemical oxidative polymerization, during growth of the π-conjugated conductive polymer, the polyanion and the π-conjugated conductive polymer form a salt, causing doping of the π-conjugated conductive polymer. Particularly in those cases where a sulfo group-containing polyanion is used, because the sulfo group strongly bonds to π-conjugated conductive polymer to form a salt, the π-conjugated conductive polymer is pulled strongly towards the principal chain of the polyanion. As a result, the principal chain of the π-conjugated conductive polymer grows along the principal chain of the polyanion, enabling ready formation of a regularly arranged π-conjugated conductive polymer.

Subsequently, in an ester compound addition step, an ester compound is added to the solution or dispersion containing the π-conjugated conductive polymer, the polyanion and a solvent, thereby forming a conductive polymer coating material. In order to enable more uniform mixing, the ester compound is preferably dissolved in a solvent prior to addition.

In those cases where a conductivity improver is added, the conductivity improver may be added to either the mixed solution containing the polyanion and the π-conjugated conductive polymer, or to the mixed solution containing the polyanion, the π-conjugated conductive polymer and the ester compound, and subsequently mixed thoroughly to form a uniform solution. The conductivity improver is preferably dissolved or dispersed in a solvent prior to addition.

The conductive polymer coating material may also include a crosslinking compound.

The crosslinking compound is preferably a compound that reacts with the cross-linkable functional groups of the ester compound or the conductivity improver. For example, if the cross-linkable functional group is an unsaturated double bond (vinyl group)-containing alkenyl group, then the crosslinking compound is preferably a compound that contains an alkenyl group, if the cross-linkable functional group is a carboxyl group, then the crosslinking compound is preferably a compound that contains a hydroxyl group or an amino group, and if the cross-linkable functional group is a hydroxyl group, then the crosslinking compound is preferably a compound that contains a carboxyl group.

Specific examples of the crosslinking compound include alkenyl group-containing compounds such as methyl acrylate, ethyl acrylate, propyl acrylate, butyl acrylate, isobutyl acrylate, isooctyl acrylate, isononylbutyl acrylate, ethyl methacrylate, hydroxyethyl acrylate, methoxyethyl acrylate, methoxybutyl acrylate, stearyl acrylate, acrylate esters, acryloylmorpholine, vinylamine, N,N-dimethylvinylamine, N,N-diethylvinylamine, N,N-dibutylvinylamine, N,N-di-t-butylvinylamine, N,N-diphenylvinylamine, N-vinylcarbazole, vinyl alcohol, vinyl chloride, vinyl fluoride, vinyl ether, acrylonitrile, N-vinyl-2-pyrrolidone, acrylamide and N,N-dimethylacrylamide, carboxyl group-containing compounds such as carboxylic acids, phthalic acid, acrylic acid and polyacrylic acid, and hydroxyl group-containing compounds such as butanol, ethylene glycol and vinyl alcohol.

In those cases where the conductive polymer coating material includes the above crosslinking compound, a more stable transparent conductive layer can be formed.

If a polymerizable compound is used, then in a polymerizable compound addition step, the polymerizable compound is added to the solution or dispersion containing the π-conjugated conductive polymer, the polyanion and a solvent; thereby forming a conductive polymer coating material. In order to enable more uniform mixing, the polymerizable compound is preferably dissolved in a solvent prior to addition.

Furthermore, a precursor compound (monomer) for synthesizing an aforementioned other resin component may also be added to the conductive polymer coating material. If a monomer that synthesizes another resin component is added then the other resin component is formed during formation of the coating.

Free ions are preferably removed from the prepared conductive polymer coating material by ultrafiltration. In an ultrafiltration method, a polymer membrane (an ultrafiltration membrane) formed with a constant pore diameter is positioned on top of a porous material and the solution is circulated. Because a differential pressure develops across the ultrafiltration membrane between the circulating solution side and the permeated solution side, a portion of solution on the circulating solution side permeates through to the permeated solution side, releasing the pressure at the circulating solution side. As a result of this phenomenon, a portion of the particles in the circulating solution that are smaller than the pore diameter of the ultrafiltration membrane and a portion of the dissolved ions within the circulating solution are transferred to the permeated solution side of the membrane and removed. This method is a dilution method, and impurities can be readily removed by increasing the number of dilution repetitions.

The ultrafiltration membrane used is selected in accordance with the sizes of the particles and the nature of the ions that are to be removed, although of the various possibilities, membranes for which the molecular weight cutoff is within a range from 1,000 to 1,000,000 are preferred.

Subsequently, the conductive polymer coating material described above is applied to a transparent substrate, and a heat treatment or ultraviolet irradiation treatment is conducted as required, thereby forming a transparent conductive layer and completing the transparent conductive sheet.

Examples of the method used for applying the conductive polymer coating material include immersion, comma coating, spray coating, roll coating, and gravure printing methods.

The heat treatment can employ conventional methods such as hot air heating and infrared heating. The ultraviolet irradiation treatment can employ methods that involve irradiation of ultraviolet light from a light source such as an ultra high-pressure mercury lamp, high-pressure mercury lamp, low-pressure mercury lamp, carbon arc lamp, xenon arc lamp, or metal halide lamp.

The crosslinking reaction initiated by the heat treatment or ultraviolet irradiation treatment varies depending on the nature of the cross-linkable functional groups. For example, a crosslinking reaction of an alkenyl group is a radical crosslinking reaction initiated by a radical-generating catalyst or a cationic crosslinking reaction, whereas carboxyl group and crosslinking reactions of hydroxyl group are heat crosslinking reactions initiated by a catalyst.

According to the method for manufacturing a transparent conductive sheet described above, a conductive polymer coating material containing the π-conjugated conductive polymer, the polyanion, and the ester compound or polymerizable compound is applied to a transparent substrate, forming a transparent conductive layer. Accordingly, because the polyanion undergoes crosslinking via the ester compound or polymerizable compound, molecules of the π-conjugated conductive polymer, which are doped with the polyanion, can be drawn closer together. Accordingly, the density of the π-conjugated conductive polymer can be increased, enabling improvements in the water resistance, the adhesion between the transparent substrate and the transparent conductive layer, the retention of the surface resistivity under conditions of high temperature and high humidity, and the conductivity. In particular, in the case of the conductivity, the surface resistivity is reduced to no more than 1,000 Ω. Because the conductivity increases, the thickness of the transparent conductive layer can be reduced, and a total light transmittance of not less than 80% and a haze of not more than 5% can be achieved. Furthermore, because the transparent conductive layer is formed by application of the conductive polymer coating material, the adhesion between the transparent substrate 11 and the transparent conductive layer 12 can be improved.

<Touch Panel>

As follows is a description of a touch panel according to the present invention.

FIG. 2 shows an embodiment of a touch panel according to the present invention. This touch panel 1 includes a first transparent conductive sheet 10a, a second transparent conductive sheet 10b, and an insulating spacer 20 provided between the first transparent conductive sheet 10a and the second transparent conductive sheet 10b. The transparent conductive layers 12a and 12b of the transparent conductive sheets 10a and 10b are positioned facing each other. Furthermore, an image is displayed on the side of the second transparent conductive sheet 10b of the touch panel 1.

In the above touch panel 1, the transparent conductive sheet 10 described above is used as the first transparent conductive sheet 10a and the second transparent conductive sheet 10b.

There are no particular restrictions on the insulating spacer 20, which may be selected appropriately from conventional materials, although in terms of transparency, an acrylic resin is preferred.

In the touch panel 1, the transparent conductive layer 12a of the first transparent conductive sheet 10a, and the transparent conductive layer 12b of the second transparent conductive sheet 10b are connected to an electrical power supply and energized. In this state, if an arbitrary position on the transparent substrate 11 of the first transparent conductive sheet 10a is pressed, then the first transparent conductive sheet 10a deforms, causing the transparent conductive layer 12a of the first transparent conductive sheet 10a to contact the transparent conductive layer 12b of the second transparent conductive sheet 10b. As a result, an electrical current flows, and a signal is generated. By utilizing this signal, the touch panel is able to function as a data input device.

In the touch panel of the present invention, because the conductivity of the transparent conductive layers of the transparent conductive sheets is high, pressing the first transparent conductive sheet 10a causes conduction between the transparent conductive layer 12a of the first transparent conductive sheet 10a and the transparent conductive layer 12b of the second transparent conductive sheet 10b, meaning the operational reliability of the panel is very high. Furthermore, because the transparency of the first transparent conductive sheet 10a and the second transparent conductive sheet 10b is high, visibility of the image is excellent.

Moreover, the water resistance of the first transparent conductive sheet 10a and the second transparent conductive sheet 10b, the adhesion between the transparent substrates 11 and the transparent conductive layers 12a and 12b, and the retention of the surface resistivity under conditions of high temperature and high humidity are excellent, meaning the touch panel exhibits superior durability.

The touch panel of the present invention is not limited to the configuration described above. For example, in the example described above, both the first transparent conductive sheet 10a and the second transparent conductive sheet 10b were transparent conductive sheets according to the present invention, but only one of the sheets need to be a transparent conductive sheet of the present invention.

EXAMPLES

As follows is a specific description of examples of the present invention, although the present invention is in no way limited by these examples.

(Production Example 1) Synthesis of Polystyrenesulfonic Acid

206 g of sodium styrenesulfonate was dissolved in 1,000 ml of ion-exchanged water, and with the solution undergoing constant stirring at 80°C; an oxidizing agent solution prepared by dissolving 1.14 g of ammonium persulfate in 10 ml of water was added dropwise over 20 minutes, and the resulting solution was stirred for 2 hours.

To the resulting sodium styrenesulfonate-containing solution were added 1,000 ml of sulfuric acid that had been diluted to 10% by mass, and 10,000 ml of ion-exchanged water. An ultrafiltration method was then used to remove approximately 10,000 ml of the polystyrenesulfonic acid-containing solution, 10,000 ml of ion-exchanged water was added to the residue, and the ultrafiltration method was used to once again remove approximately 10,000 ml of solution. The above ultrafiltration operation was repeated 3 times.

Approximately 10,000 ml of ion-exchanged water was added to the thus obtained filtrate, and the ultrafiltration method was used to remove approximately 10,000 ml of solution. This ultrafiltration operation was repeated 3 times.

The ultrafiltration conditions were as listed below (this also applies to the other examples)

Molecular weight cutoff for ultrafiltration membrane: 30K

Crossflow system

Feed flow rate: 3,000 ml/minute
Membrane partial pressure: 0.12 Pa

Water in the resulting solution was removed under reduced pressure, yielding a colorless, solid polystyrenesulfonic acid.

(Production Example 2) Synthesis of Ester Compound

43.6 g of pyromellitic dianhydride and 73.6 g of glycerol were placed in a round-bottomed flask and mixed. The round-bottomed flask containing the mixture of the pyromellitic dianhydride and glycerol was placed in an oil bath at 100°C, and following stirring for 10 minutes, 0.1 g of p-toluenesulfonic acid was added, and stirring was continued for a further one hour. This caused a dehydration reaction to occur between the pyromellitic dianhydride and the glycerol, yielding a reaction solution containing an ester compound. 115 g of ion-exchanged water was added to the obtained reaction solution, dissolution was achieved by stirring, and the concentration of the solution was then adjusted to a solid fraction concentration of 50% by mass by adding further ion-exchanged water. The resulting aqueous solution was used as an ester compound aqueous solution.

(Example 1)

14.2 g of 3,4-ethylenedioxythiophene and a solution prepared by dissolving 36.7 g of polystyrenesulfonic acid in 2,000 ml of ion-exchanged water were mixed at 20°C.

The thus obtained mixed solution was held at 20°C, and with constant stirring, an oxidation catalyst solution prepared by dissolving 29.64 g of ammonium persulfate and 8.0 g of ferric sulfate in 200 ml of ion-exchanged water was added gradually, and the resulting mixed solution was then stirred for 3 hours to allow the reaction to proceed.

2,000 ml of ion-exchanged water was added to the resulting reaction solution, and an ultrafiltration method was used to remove approximately 2,000 ml of solution. This operation was repeated 3 times.

To the treated solution obtained by the above filtration treatment were added 200 ml of sulfuric acid that had been diluted to 10% by mass and 2,000 ml of ion-exchanged water, and approximately 2,000 ml of the treated solution was removed using an ultrafiltration method. A further 2,000 ml of ion-exchanged water was added to the solution, and approximately 2,000 ml of the solution was removed using an ultrafiltration method. This operation was repeated 3 times.

To the thus obtained treated solution was added a further 2,000 ml of ion-exchanged water, and approximately 2,000 ml of the treated solution was removed using an ultrafiltration method. This operation was repeated 5 times, yielding an approximately 1.5% by mass blue solution of polystyrenesulfonic acid-doped poly(3,4-ethylenedioxythiophene) (PSS-PEDOT). This solution was used as a π-conjugated conductive polymer solution.

Subsequently, to 100 ml of the thus obtained π-conjugated conductive polymer solution were added 3.0 g of the above ester compound solution and 2.25 g of the conductivity improver 1,2,3-trihydroxybenzene, and the mixture was dispersed uniformly, yielding a conductive polymer coating material.

This conductive polymer coating material was applied to a PET film (T680E100, manufactured by Mitsubishi Polyester Film GmbH) that acted as a transparent substrate using a bar coater (No. 16), and was then heated and dried for 5 minutes in a 150°C oven. This completed formation of a transparent conductive layer, thereby yielding a transparent conductive sheet.

The thus obtained transparent conductive sheet was evaluated using the methods described below. The results of these evaluations are shown in Table 1.

(Evaluation Methods)

- Surface Resistivity (Conductivity)

The surface resistivity of the transparent conductive sheet was measured using a LORESTA (manufactured by Mitsubishi Chemical Corporation).

- Variation in Surface Resistivity under Humidity (%)

The surface resistivity $R_{25B}$ of the transparent conductive sheet under an atmosphere at a temperature of 25°C and a humidity of 60% RH was measured, following measurement, the transparent conductive sheet was left to stand for 120 hours under an atmosphere at a temperature of 60°C and a humidity of 95% RH, the transparent conductive sheet was returned to an atmosphere at a temperature of 25°C and a humidity of 60% RH, the surface resistivity $R_{25A}$ was measured, and the measured values were then inserted into the following formula to calculate the variation in surface resistivity under humidity. This variation in the surface resistivity under humidity is an indicator of the humidity resistance.

$$\text{Variation in surface resistivity under humidity (\%)} = 100 \times (R_{25B} - R_{25A}) / R_{25B}$$

- Evaluation of Water Resistance

A cloth (an F1-type ADCLEAN wiper) soaked in water was wiped 10 times back and forth across the surface of the transparent conductive substrate with a 200 g weight applied thereto, and the surface was then evaluated visually.

- Evaluation of Total Light Transmittance

The total light transmittance was measured in accordance with JIS Z 8701.

- Evaluation of Haze

The haze was measured in accordance with JIS K 6714.

- Evaluation of Adhesion

An adhesion test was conducted using a cross-cut tape test (JIS K 5400).
Specifically, a cutter was used to insert 11 lengthwise and 11 crosswise cuts at 1 mm intervals in the surface of the transparent conductive sheet (thereby forming a total of 100 square cells). A pressure-sensitive adhesive tape was bonded to the surface and then peeled off, and the number of cells retained on the PET film was counted.

(Comparative Example 1)

With the exception of adding only the 1,2,3-trihydroxybenzene to the 100 ml of the π-coajugated conductive polymer solution obtained in the example 1, a transparent conductive sheet was obtained and evaluated in the same manner as the example 1. The results are shown in Table 1.

(Conventional Example)

Using a transparent conductive sheet prepared by forming a transparent conductive layer of ITO on top of a PET film, evaluations were conducted in the same manner as the example 1. The results are shown in Table 1.

The transparent conductive sheet of the example, having a transparent conductive layer formed by applying a conductive polymer coating material containing the π-conjugated conductive polymer, the polyanion and the ester compound, exhibited a low haze value and excellent transparency. Furthermore, it also displayed levels of surface resistivity, water resistance, and adhesion that were similar to those of the conventional example in which the transparent conductive layer was formed from ITO. If a touch panel is assembled using this type of transparent conductive sheet, then excellent levels of operational stability and durability can be expected.

The transparent conductive sheet of the comparative example, having a transparent conductive layer formed by applying a conductive polymer coating material containing the π-conjugated conductive polymer and the polyanion, but containing no ester compound, exhibited poor water resistance. Furthermore, the conductivity was also low. If a touch panel is assembled using this type of transparent conductive sheet, then the levels of operational stability and durability are predicted to deteriorate.

[Table 1]

|  | Example 1 | Comparative Example 1 | Conventional Example |
|---|---|---|---|
| Surface resistivity (Ω) | 342 | 436 | 236 |
| Variation in surface resistivity under humidity (%) | 5.3 | 15.3 | 0.4 |
| Water resistance | Yes | No | Yes |
| Total light transmittance (%) | 87.4 | 87.4 | 89.3 |
| Haze (%) | 1.69 | 1.79 | 7.02 |
| Adhesion | 100 retained | 100 retained | 100 retained |

(Example 2)

14.2 g of 3,4-ethylenedioxythiophene and a solution prepared by dissolving 36.7 g of polystyrenesulfonic acid in 2,000 ml of ion-exchanged water were mixed at 20°C.

The thus obtained mixed solution was held at 20°C, and with constant stirring, an oxidation catalyst solution prepared by dissolving 29.64 g of ammonium persulfate and 8.0 g of ferric sulfate in 200 ml of ion-exchanged water was added gradually, and the resulting mixed solution was then stirred for 3 hours to allow the reaction to proceed.

2,000 ml of ion-exchanged water was added to the resulting reaction solution, and an ultrafiltration method was used to remove approximately 2,000 ml of solution. This operation was repeated 3 times.

To the treated solution obtained by the above filtration treatment were added 200 ml of sulfuric acid that had been diluted to 10% by mass and 2,000 ml of ion-exchanged water, and approximately 2,000 ml of the treated solution was removed using an ultrafiltration method. A further 2,000 ml of ion-exchanged water was added to the solution, and approximately 2,000 ml of the solution was removed using an ultrafiltration method. This operation was repeated 3 times.

To the thus obtained treated solution was added a further 2,000 ml of ion-exchanged water, and approximately 2,000 ml of the treated solution was removed using an ultrafiltration method. This operation was repeated 5 times, yielding an approximately 1.5% by mass blue solution of polystyrenesulfonic acid-doped poly(3,4-ethylenedioxythiophene) (PSS-PEDOT). This solution was used as a π-conjugated conductive polymer solution.

Subsequently, to 100 g of the thus obtained π-conjugated conductive polymer solution was added 3.7 g (5-molar equivalents relative to the polystyrenesulfonic acid) of N-hydroxyethyl acrylamide, and the mixture was dispersed uniformly, yielding a conductive polymer coating material.

This conductive polymer coating material was applied to a PET film (T680E100, manufactured by Mitsubishi Polyester Film GmbH) that acted as a transparent substrate using a bar coater (No. 16), and was then heated and dried for 5 minutes in a 120°C oven. This completed formation of a transparent conductive layer, thereby yielding a transparent conductive sheet.

The thus obtained transparent conductive sheet was evaluated using the methods described below. The results of these evaluations are shown in Table 2.

(Evaluation Methods)

- Surface Resistivity (Conductivity)

The surface resistivity of the transparent conductive sheet was measured using a LORESTA (manufactured by Mitsubishi Chemical Corporation).

- Evaluation of Total Light Transmittance

The total light transmittance was measured in accordance with JIS K 7361-1.

- Evaluation of Haze

The haze was measured in accordance with JIS K 7136.

- Evaluation of Water Resistance

A cloth (an F1-type ADCLEAN wiper) soaked in water was wiped 10 times back and forth across the surface of the transparent conductive substrate with a φ 50 mm, 200 g weight applied thereto, and the surface was then evaluated visually.

- Evaluation of Adhesion

An adhesion test was conducted using a cross-cut tape test (JIS K 5600-5-6).
Specifically, six cuts were made on the surface of the Transparent conductive sheet in longitudinal and transverse direction, respectively, at 1mm intervals by using a cutter (thereby forming a total of 25 square cells). A pressure-sensitive adhesive tape was bonded to the surface and then peeled off, and the number of cells retained on the PET film was counted.

(Example 3)

With the exception of adding a polymerization initiator Irgacure 754 (manufactured by Ciba Specialty Chemicals Inc.), in addition to the 3.7 g of N-hydroxyethyl acrylamide, to the 100 g of the π-conjugated conductive polymer solution obtained in the example 2, a transparent conductive sheet was obtained and evaluated in the same manner as the example 2. The results are shown in Table 2.

(Example 4)

With the exception of adding 4.5 g of diethylene glycol monovinyl ether, which represents a compound (b), to the 100 g of the π-conjugated conductive polymer solution obtained in the example 2, a transparent conductive sheet was obtained and evaluated in the same manner as the example 2. The results are shown in Table 2.

(Example 5)

With the exception of adding Irgacure 754, in addition to the 4.5 g of diethylene glycol monovinyl ether, to the 100 g of the π-conjugated conductive polymer solution obtained in the example 2, a transparent conductive sheet was obtained and evaluated in the same manner as the example 4. The results are shown in Table 2.

(Comparative Example 2)

Using a transparent conductive sheet prepared by forming a transparent conductive layer of ITO on top of a PET film, evaluations were conducted in the same manner as the example 2. The results are shown in Table 2.
[Table 2]

|  | Example 2 | Example 3 | Example 4 | Example 5 | Comparative example 2 |
|---|---|---|---|---|---|
| Surface resistivity (kΩ) | 133 | 137 | 200 | 225 | 236 |
| Total light transmittance (%) | 81.7 | 82.0 | 80.9 | 82.2 | 89.3 |
| Haze (%) | 1.70 | 1.72 | 1.91 | 2.36 | 7.02 |
| Water resistance | No | Yes | No | Yes | Yes |
| Adhesion | 25 retained | 25 retained | 25 retained | 25 retained | 25 retained |

The transparent conductive sheets of the examples 2 to 5, having a transparent conductive layer formed by applying a conductive polymer coating material containing the π-conjugated conductive polymer, the polyanion and a specific polymerizable compound, exhibited low haze values and excellent transparency. Furthermore, they also displayed levels of surface resistivity and adhesion that were similar to those of the comparative example 2 in which the transparent conductive layer was formed from ITO. If a touch panel is assembled using this type of transparent conductive sheet, then excellent levels of operational stability and durability can be expected.
Furthermore, the transparent conductive sheets of the examples 3 and 5, having a transparent conductive layer formed by applying a conductive polymer coating material that also contained a polymerization initiator, also exhibited excellent water resistance.
In contrast, the transparent conductive sheet of the comparative example 2, in which the transparent conductive layer was formed from ITO, had a high haze value and suffered from inferior transparency.

(Example 6)

A touch panel containing two of the transparent conductive sheets from the example 2 was prepared. Specifically, the two transparent conductive sheets were arranged with the transparent conductive layers facing each other, and an insulating spacer was disposed between the sheets.
Using either a piece of silicone rubber having a hemispherical tip with a radius of 3 mm, or a polyacetal pen having a hemispherical tip with a radius of 0.8 mm as a pressure-applying device, the contact resistance between the transparent conductive sheets upon applying pressure to the transparent conductive sheet with the pressure-applying device was measured. The above silicone rubber resembles a human finger, whereas the polyacetal pen resembles a stylus. The results are shown in Table 3.

(Example 7)

A touch panel was prepared by positioning a transparent conductive sheet of the example 2 on the upper surface, and positioning an ITO sheet of the comparative example 2 on the rear surface. The contact resistance was then measured in the same manner as the example 6. The results are shown in Table 3.
[Table 3]

| Pressure-application device | | | Example 6 | Example 7 |
|---|---|---|---|---|
| Contact Resistance (kΩ) | Silicone rubber | Initial value | 1.009 | 4.50 |
| | | After 1 minute | 0.959 | 3.18 |
| | | After 2 minutes | 0.950 | 2.92 |
| | | After 3 minutes | 0.944 | 2.82 |
| | Polyacetal pen | Initial value | 1.17 | 3.66 |
| | | After 1 minute | 1.12 | 2.84 |
| | | After 2 minutes | 1.11 | 2.69 |
| | | After 3 minutes | 1.11 | 2.60 |

In the touch panels of the examples 6 and 7 that used a transparent conductive sheet from the example 2, the contact resistance was low. In the touch panel of the example 6, which used transparent conductive sheets of the example 2 for both of the pair of transparent conductive sheets, the contact resistance values were particularly low.

INDUSTRIAL APPLICABILITY

The present invention is able to provide a transparent conductive sheet for a touch panel that has a surface resistivity of not more than 1,000 Ω, a total light transmittance of not less than 80%, and a haze of not more than 5%, and exhibits excellent levels of water resistance, adhesion between the transparent substrate and the transparent conductive layer, and retention of the surface resistivity under conditions of high temperature and high humidity, as well as a method for manufacturing such a transparent conductive sheet. Furthermore, the present invention is also able to provide a touch panel with excellent operational reliability and superior durability.

## Claims

1. A transparent conductive sheet for a touch panel, comprising a transparent substrate and a transparent conductive layer formed on top of said transparent substrate, wherein

   said transparent conductive layer comprises a π-conjugated conductive polymer, a polyanion, and an ester compound having the molecular weight of 10000 or less, and said ester compound being obtained by a dehydration reaction between a carboxylic acid compound containing two or more carboxyl groups, a polyhydric alcohol compound containing two or more hydroxyl groups and the surface resistivity of the transparent conductive layer being reduced to no more than 1,000 Ω.

2. A transparent conductive sheet for a touch panel according to claim 1, wherein said transparent conductive layer further comprises at least one conductivity improver selected from the group consisting of hydroxyl group-containing aromatic compounds containing two or more hydroxyl groups, nitrogen-containing aromatic heterocyclic compounds, compounds containing an amide group, and compounds containing an imide group.

3. A method for manufacturing a transparent conductive sheet for a touch panel by applying a conductive polymer coating material to a transparent substrate, wherein

   said conductive polymer coating material comprises a π-conjugated conductive polymer, a polyanion, and an ester compound having the molecular weight of 10000 or less, and said ester compound being obtained by a dehydration reaction between a carboxylic acid compound containing two or more carboxyl groups, a polyhydric alcohol compound containing two or more hydroxyl groups and the surface resistivity of the transparent conductive layer being reduced to no more than 1,000 Ω.

4. A method for manufacturing a transparent conductive sheet for a touch panel according to claim 3, wherein

   said conductive polymer coating material further comprises a conductivity improver selected from the group consisting of hydroxyl group-containing aromatic compounds containing two or more hydroxyl groups, nitrogen-containing aromatic heterocyclic compounds, compounds containing an amide group, and compounds containing an imide group.

5. A touch panel, comprising a pair of transparent conductive sheets for a touch panel, and an insulating spacer provided within a portion of a space between said pair of transparent conductive sheets for a touch panel, in which transparent conductive layers of said transparent conductive sheets for a touch panel are positioned facing each other, wherein

   at least one of said pair of transparent conductive sheets for a touch panel is a transparent conductive sheet for a touch panel according to any one of claim 1 or claim 2.


## Patentansprüche

1. Transparente, leitende Platte für ein Touch-Panel, ein transparentes Substrat und eine transparente, leitende Schicht umfassend, die auf der Oberseite des transparenten Substrats gebildet ist, wobei

   die transparente, leitende Schicht ein π-konjugiertes leitendes Polymer, ein Polyanion und eine Esterverbindung mit einem Molekulargewicht von 10.000 oder weniger umfasst, und wobei die Esterverbindung durch eine Dehydrierungsreaktion zwischen einer Carbonsäureverbindung, die zwei oder mehr Carboxylgruppen enthält, einer Verbindung aus mehrwertigem Alkohol, die zwei oder mehr Hydroxylgruppen enthält, gewonnen wird und der spezifische Widerstand der Oberfläche der transparenten, leitenden Schicht auf nicht mehr als 1.000 Ω reduziert ist.

2. Transparente, leitende Platte für ein Touch-Panel nach Anspruch 1, wobei die transparente, leitende Schicht ferner mindestens einen Leitfähigkeitsverbesserer umfasst, der aus der Gruppe ausgewählt ist, die aus hydroxylgruppenhaltigen aromatischen Verbindungen, die zwei oder mehr Hydroxylgruppen enthalten, stickstoffhaltigen, aromatischen, heterozyklischen Verbindungen, Verbindungen, die eine Amidgruppe enthalten, und Verbindungen, die eine Imidgruppe enthalten, besteht.

3. Verfahren zur Herstellung einer transparenten, leitenden Platte für ein Touch-Panel durch Aufbringen eines leitenden Polymerbeschichtungsmaterials auf ein transparentes Substrat, wobei

   das leitende Polymerbeschichtungsmaterial ein πkonjugiertes leitendes Polymer, ein Polyanion und eine Esterverbindung mit einem Molekulargewicht von 10.000 oder weniger umfasst, und wobei die Esterverbindung durch eine Dehydrierungsreaktion zwischen einer Carbonsäureverbindung, die zwei oder mehr Carboxylgruppen enthält, einer Verbindung aus mehrwertigem Alkohol, die zwei oder mehr Hydroxylgruppen enthält, gewonnen wird und der spezifische Widerstand der Oberfläche der transparenten, leitenden Schicht auf nicht mehr als 1.000 Ω reduziert ist.

4. Verfahren zur Herstellung einer transparenten, leitenden Platte für ein Touch-Panel nach Anspruch 3, wobei das leitende Polymerbeschichtungsmaterial ferner einen Leitfähigkeitsverbesserer umfasst, der aus der Gruppe ausgewählt ist, die aus hydroxylgruppenhaltigen aromatischen Verbindungen, die zwei oder mehr Hydroxylgruppen enthalten, stickstoffhaltigen, aromatischen, heterozyklischen Verbindungen, Verbindungen, die eine Amidgruppe enthalten, und Verbindungen, die eine Imidgruppe enthalten, besteht.

5. Touch-Panel, ein Paar transparenter, leitender Platten für ein Touch-Panel und einen isolierenden Abstandshalter umfassend, der in einem Abschnitt eines Zwischenraumes zwischen dem Paar transparenter, leitender Platten für ein Touch-Panel bereitgestellt ist, wobei die transparenten, leitenden Schichten der transparenten, leitenden Platten für ein Touch-Panel einander zugewandt angeordnet sind, wobei
mindestens eine des Paares transparenter, leitender Platten für ein Touch-Panel eine transparente leitende Platte für ein Touch-Panel nach einem der Ansprüche 1 oder 2 ist.

**Revendications**

1. Feuille conductrice transparente pour un écran tactile, qui comprend un substrat transparent et une couche conductrice transparente formée par-dessus ledit substrat transparent, dans laquelle
ladite couche conductrice transparente comprend un polymère conducteur π-conjugué, un polyanion, et un composé ester ayant une masse moléculaire de 10 000 ou moins, et ledit composé ester étant obtenu par une réaction de déshydratation entre un composé acide carboxylique contenant deux groupes carboxyle ou plus, un composé alcool polyhydrique contenant deux groupes hydroxyle ou plus, et la résistivité de surface de la couche conductrice transparente étant réduite à pas plus de 1 000 Ω.

2. Feuille conductrice transparente pour un écran tactile selon la revendication 1, dans laquelle ladite couche conductrice transparente comprend en outre au moins un agent améliorant la conductivité choisi dans le groupe constitué par des composés aromatiques contenant des groupes hydroxyle contenant deux groupes hydroxyle ou plus, des composés hétérocycliques aromatiques contenant des atomes d'azote, des composés contenant un groupe amide, et des composés contenant un groupe imide.

3. Procédé de fabrication d'une feuille conductrice transparente pour un écran tactile par application d'un matériau de revêtement à base de polymère conducteur à un substrat transparent, dans lequel
ledit matériau de revêtement à base de polymère conducteur comprend un polymère conducteur π-conjugué, un polyanion, et un composé ester ayant une masse moléculaire de 10 000 ou moins, et ledit composé ester étant obtenu par une réaction de déshydratation entre un composé acide carboxylique contenant deux groupes carboxyle ou plus, un composé alcool polyhydrique contenant deux groupes hydroxyle ou plus, et la résistivité de surface de la couche conductrice transparente étant réduite à pas plus de 1 000 Ω.

4. Procédé de fabrication d'une feuille conductrice transparente pour un écran tactile selon la revendication 3, dans lequel
ledit matériau de revêtement à base de polymère conducteur comprend en outre un agent améliorant la conductivité choisi dans le groupe constitué par des composés aromatiques contenant des groupes hydroxyle contenant deux groupes hydroxyle ou plus, des composés hétérocycliques aromatiques contenant des atomes d'azote, des composés contenant un groupe amide, et des composés contenant un groupe imide.

5. Ecran tactile, comprenant une paire de feuilles conductrices transparentes pour un écran tactile, et un espaceur isolant fourni à l'intérieur d'une partie d'un espace entre ladite paire de feuilles conductrices transparentes pour un écran tactile, dans lequel les couches conductrices transparentes desdites feuilles conductrices transparentes pour un écran tactile sont positionnées l'une en face de l'autre, dans lequel
au moins une des feuilles de ladite paire de feuilles conductrices transparentes pour un écran tactile est une feuille conductrice transparente pour un écran tactile selon l'une quelconque des revendications 1 et 2.

FIG. 1

FIG. 2

**EP 1 947 655 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005283862 A
- JP 2005320540 A
- JP 2005146259 A
- EP 1384739 A1
- JP 08120167 A
- JP 2003256141 A
- US 20030170456 A1
- JP 2003308736 A
- US 20030170492 A1